# EUROPEAN PATENT APPLICATION

(11) **EP 1 453 247 A2**
(43) Date of publication of application: **01.09.2004**
(21) Application number: 04001810.3
(22) Date of filing: 28.01.2004
(51) Int. Cl.: H04L 12/28, H04M 11/02

(54) **Network system, server apparatus, and communication method**

(30) Priority: 28.02.2003 JP 2003053047
(71) Applicant: Kabushiki Kaisha Toshiba, Tokyo (JP)
(72) Inventor: Ohno, Katsuya, Toshiba Corporation, Tokyo 105-8001 (JP)
(74) Representative: Henkel, Feiler & Hänzel

(57) **Abstract**

A doorphone (1) is provided with a camera, a microphone, a button serving as an input device, and a loudspeaker serving as an output device. When a visitor pushes the button, the camera starts recording an image and the microphone becomes ready for input of voice. The doorphone (1) sends the recorded image and the input voice to an operation panel (10). The doorphone (1) sends the recorded image and the input voice to the home server (2) as well. Upon reception of the image and the voice, the home server (2) recognizes which sensor (3) senses a user (6) through the use of a LAN (100), and selects a video/audio device (e.g., a personal computer (5a)) associated with that sensor (3) as a data destination device. The image and voice received from the doorphone (1) are transferred to the selected video/audio device through the LAN (100).

## Description

The present invention relates to a network system, a server apparatus and a communication method.

Home networks in which home-use electronic devices are connected together have become popular in recent years, as communication technology and information processing technology advance. Installed indoors, home networks enable the electronic devices of different rooms to be organically coupled together, creating added values.

In the home network system described in Jpn. Pat. Appln. KOKAI Publication No. 2002-135745, a home server receives external broadcast signals and transmits them to the display device of each room. The user can therefore arrange the electronic devices without being restricted by antenna wires and enjoy desired broadcast service in a desired room.

In the network system described above, the home server transmits external broadcast signals to the display device in each room in response to a request the display device makes. In other words, the destination display device to which the external broadcast signals are transmitted is determined by operations the destination display device performs.

There may be a case where the user wishes automatic transmission wherein various kinds of data the home server receives are automatically transmitted to the electronic device of the room where the user is in at the time. In the above network system, however, the home server merely identifies the destination display device to which the signals or data should be sent; it does not have a function of positively selecting the destination display device.

The present invention has been made under these circumstances, and an object of the present invention is to provide a network system, a server apparatus and a communication method, which enable selecting an optimal data transmission destination device desired at any given time.

To achieve this object, the present invention ' provides a network system, having human sensors, which transfers data from a first device to second devices by way of a server device, the server device characterized by comprising a positional information storage unit which stores positional information representing correspondence between the human sensors and the second devices, a transfer destination selecting unit selecting one of the second devices as a destination device to which the data transmitted from the first device should be sent, based on sensing information from the human sensors and the positional information stored in the positional information storage unit, and a data transfer unit transferring data from the first device to the one of the second devices which is selected by the transfer designation selecting unit.

Owing to these features, the present invention can provide a network system, a server apparatus and a communication method, which enable selecting an optimal data transmission destination device desired at any given time.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram illustrating a home network system according to the first embodiment of the present invention.
FIG. 2 is a function block of the home network system of the first embodiment.
FIG. 3 shows an example of positional information stored by a storage unit for storing positional information regarding video/audio device of the home network system of the first embodiment.
FIG. 4 is a flowchart illustrating how a home server operates in the home network system of the first embodiment.
FIG. 5 is a flowchart illustrating how a personal computer operates in the home network system of the first embodiment.
FIG. 6 is a diagram illustrating a home network system according to the second embodiment of the present invention.
FIG. 7 is a function block of the home network system of the second embodiment.
FIG. 8 shows an example of telephone information stored by a storage unit for storing user's portable phone information of the home network system of the second embodiment.
FIG. 9 is a flowchart illustrating how a home server operates in the home network system of the second embodiment.
Embodiments of the present invention will now be described with reference to the drawings.

### (First Embodiment)

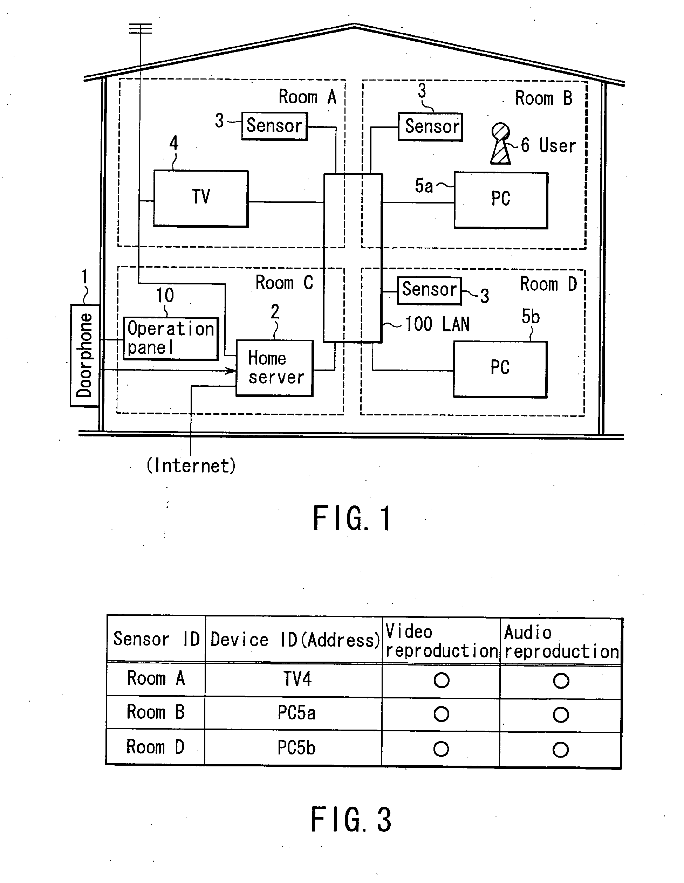

The first embodiment of the present invention will be described. FIG. 1 is a diagram illustrating a home network system according to the first embodiment of the present invention.

The home network system comprises a doorphone 1 (i.e., an intercom installed at the front door of a house), a home server 2, human sensors 3 (which sense the presence or absence of a user), a television receiver 4, and personal computers 5a and 5b. The home server 2 is an electronic device that plays the most important role of the system, and provides various kinds of service to the personal computers 5a and 5b, such as the recording/reproduction of television broadcasts, the browsing of Internet web sites; etc. A local area network (LAN) 100 installed indoors connects the home server 2, the human sensors 3, the television receiver 4 and the personal computers 5a and 5b to one another. The doorphone 1 is connected to the home server 2.

The doorphone 1 comprises an input device such as a camera, a microphone and a push button, and an output device such as a loudspeaker. When a visitor pushes the button, the camera starts recording an image and the microphone becomes ready for input of voice. The recorded image and the input voice are transmitted to an operation panel 10. The operation panel 10 comprises an input device such as a microphone and a push button, a monitor and an output device such as a loudspeaker. The image recorded by the camera of the doorphone 1 is displayed on the monitor of the operation panel 10, and the voice input by the microphone of the doorphone 1 is output from the loudspeaker of the operation panel 10. When a resident (who will be hereinafter referred to simply as a user 6) pushes the button of the operation panel 10, the microphone of the operation panel 10 becomes ready for input of voice, and the loudspeaker of the doorphone 1 outputs the input voice.

The image and voice the doorphone 1 records are transmitted to the home server 2 as well. The home server 2 can appropriately transfer the image and voice to the television receiver 4 and the personal computers 5a and 5b, according to the situation. A detailed, description will be given of this point.

Let us assumed that the house has four rooms A-D, and the operation panel 10 connected to the doorphone 1 is located in room C. The home server 2 is also located in room C. The television receiver 4 is located in room A, and personal computers 5a and 5b are located in rooms B and D, respectively. The user is in room B and operates personal computer 5a.

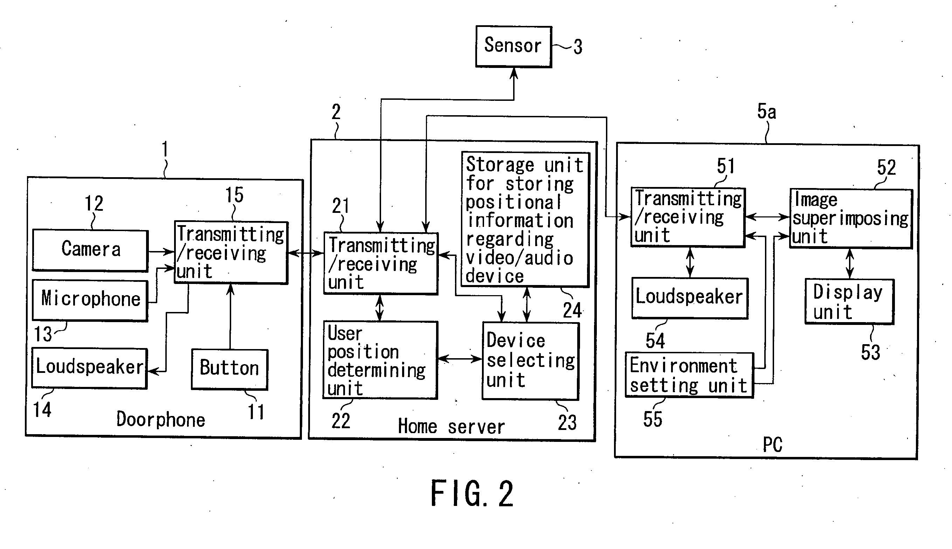

When a visitor comes to the house, the home server 2 receives the image and voice from the doorphone 1 and transmits them to personal computer 5a of room B where the user is present at the time. The principles underlying the communication control the home server 2 executes will be described, referring to FIG. 2. FIG. 2 is a function block of the home network system of the first embodiment.

The doorphone 1 comprises the button 11, camera 12, microphone 13 and loudspeaker 14, as described above. In addition, the doorphone 1 comprises a transmitting/receiving unit 15 configured to transmit or receive various kinds of data from the home server 2. When the visitor pushes the button 11, the camera 12 starts recording an image and the microphone 13 becomes ready for input of voice. The recorded image and the input voice are transmitted to the home server 2 by way of the transmitting/receiving unit 15.

The home server 2 comprises a transmitting/receiving unit 21, a user position determining unit 22, a device selecting unit 23 and a storage unit 24 for storing positional information regarding video/audio devices.

The transmitting/receiving unit 21 exchange data with the doorphone 1 and manages the communications the human sensors 3 and personal computer 5a perform via the LAN 100. Upon receipt of image data and voice data from the doorphone 1, the transmitting/receiving unit 21 notifies the user position determining unit 22 of the reception of the data.

The user position determining unit 22 checks in which room the user is present, by acquiring information representing how the human sensors 3 of the respective rooms A, B and D sense. The information is acquired by way of the transmitting/receiving unit 21. The function of the human sensors 3 can be realized in many ways. For example, the user 6 may be sensed by monitoring whether or not an emitted infrared ray is intercepted or by sensing sound or a temperature that has exceeded a predetermined level. The user position determining unit 22 notifies the device selecting unit 23 of the human sensor 3 that is sensing the user 6.

If none of the human sensors 3 sense the user 6, the user position determining unit 22 causes the transmitting/receiving unit 21 to transmit a user-absence message to the doorphone 1.

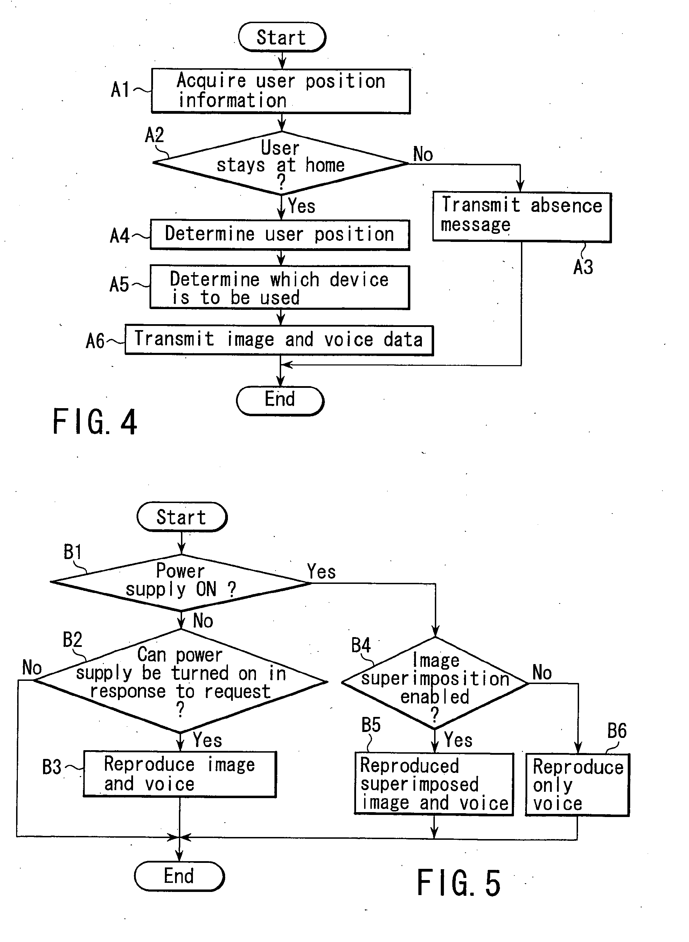

Based on the notification from the user position determining unit 22 and the positional information stored in the storage,unit 24, the device selecting unit 23 selects a destination device to which the image data and voice data entered from the doorphone 1 should be sent. FIG. 3 shows an example of positional information the storage unit 24 stores.

As FIG. 3 shows, the positional information the storage unit 24 stores is in the form of a table and includes fields corresponding to "sensor ID", "device ID (address)", "video reproduction" and "audio reproduction". Since a notification indicating that the human sensor 3 of room B is sensing the user 6 is received from the user position determining unit 22 at the time, the device selecting unit 23 refers to this positional information and determines that the personal computer 5a is suitable for use as a destination device to which the image data and voice data from the doorphone 1 should be sent.

Then, the device selecting unit 23 recognizes that the personal computer 5a has both the video reproduction function and the audio reproduction function. The device selecting unit 23 notifies the transmitting/receiving unit 21 that the image data and the voice data transmitted from the doorphone 1 are to be sent to the personal computer 5a.

Upon receipt of this notification from the device selecting unit 23, the transmitting/receiving unit 21 transfers the image data and voice data, which have been transmitted from the doorphone 1, to the personal computer 5a.

The personal computer 5a serving as a destination device comprises a transmitting/receiving unit 51, an image superimposing unit 52, a display unit 53, a loudspeaker 54 and an environment setting unit 55.

The transmitting/receiving unit 51 controls the communications the home server 2 and the personal computer 5a perform through the LAN 100. Upon receipt of the image data and voice data transmitted from the doorphone 1, the transmitting/receiving unit 51 transmits the image data to the image superimposing unit 52 and the voice data to the loudspeaker 54.

The image superimposing unit 52 performs image processing so that the image transmitted from the doorphone 1 is superimposed on part (e.g., at the upper right corner) of the image data shown on the display unit 53. By this image processing, the image of the visitor who depressed the button 11 of the doorphone 1 is displayed on part of the display unit 53. The image of the visitor may be displayed on the entirety of the display unit 53, replacing the image data that has been shown until then.

The voice of the visitor is output from the loudspeaker 54. As can be seen from this, the network system detects the presence of the user 6 without reference to the room the user is present. Through the television receiver 4 or personal computer 5a, 5b of the room where the user 6 is present, the image and voice of the visitor are presented to the user 6.

With respect to the image data and voice data. transmitted from the doorphone 1, the environment setting unit 55 of the personal computer 5a shown in FIG. 2 enables selection of one of the following two operation environment:
(1) whether or not the power supply can be turned on in response to a request
   Even if the main power supply is OFF, the transmitting/receiving unit 51 of the personal computer 5a is in the standby state and is ready to receive data from the home server 2. When the operation environment is set that the power supply can be turned on, the transmitting/receiving unit 51 turns on the power supply of the personal computer 5a.
   Accordingly, the image data from the doorphone 1 is displayed, and the voice data from the same is output.
(2) whether or not superimposition of images is enabled

In this operation environment, the user can designate whether or not to superimpose image data (which is provided by the doorphone 1 and transferred by the home server 2) on the presently-displayed image data. When the operation environment is set that the superposition of images is enabled, the image superimposing unit 52 executes image processing for the image superimposition described above. When the operation environment is set that the superposition of images is disabled, the image processing is not executed, and only the voice is output from the loudspeaker 54.

FIG. 4 is a flowchart illustrating how the home server 2 operates in the home network system of the present embodiment.

When image data and voice data are transmitted, the user position determining unit 22 acquires user position information through the transmitting/receiving unit 21 (Step A1). The user position information represents how the human sensors 3 of the rooms sense a user 6. If none of the human sensors 3 sense the user 6 (NO in Step A2), then the user position determining unit 21 transmits an absence message (voice data) to the doorphone 1 by way of the transmitting/receiving unit 21 (Step A3) .

If one of the human sensors 3 senses the user 6 (YES in Step A2), the user position determining unit 22 determines that the room where that human sensor 3 is installed indicates the position of the user. Then, the user position determining unit 22 notifies the device selecting unit 23 of the ID assigned to the human sensor 3 (Step A4).

Upon receipt of this notification, the device selecting unit 23 refers to the information the storage unit 24 stores and recognizes which device (the television receiver 4, personal computer 5a, or personal computer 5b) is associated with the human sensor 3. The device determined as being associated with the human sensor 3 is a destination video/audio device to which the image data and audio data should be sent. Then, the device selecting unit 23 sends a command to the transmitting/receiving unit 21 so that the image data and voice data the transmitting/receiving unit 21 receives from the doorphone 1 may be sent to the destination video/audio device (Step A5).

Upon receipt of the command, the transmitting/receiving unit 21 transmits the image data and voice data, which are from the doorphone 1, to the video/audio device selected by the device selecting unit 23 (Step A6).

FIG. 5 is a flowchart illustrating how personal computer 5a operates in the home network system.

When image data and voice data are transmitted, the transmitting/receiving unit 51 checks if the main power supply is ON (Step B1). If the main power supply is not ON (NO in Step B1), then the transmitting/receiving unit 51 checks if the main power supply can be turned on in response to a request (Step B2).

If the check shows that the main power supply can be turned on (YES in Step B2), the transmitting/receiving unit 51 sends the image data to the image superimposing unit 52 and the voice data to the loudspeaker 54. Since no image data is displayed in this case, the display unit 53 displays only the image from the doorphone 1 in a full-screen mode (Step B3). On the other hand, if the check shows that the main power supply cannot be turned on (NO in Step B2), the transmitting/receiving unit 51 does not display the image data or output the voice data.

Where the main power supply is ON (YES in Step B1), the transmitting/receiving unit 51 immediately supplies the image data to the image superimposing unit 52 and supplies the voice data to the loudspeaker 54. Upon receipt of the image data, the image superimposing unit 52 checks if the image superimposition can be performed (Step B4). If this is the case (YES in Step B4), the image superimposing unit 52 executes image processing to superimpose the image data from the doorphone 1 on the image that is being displayed (Step B5). If the image superimposition is disabled (NO in Step B4), the image processing is not executed, and only the voice is output from the loudspeaker 54 (Step B6) .

As described above, the home network-system identifies the position of the user 6 by means of the human sensors 3, and selects a video/audio device suited to the position of the user 6. In this manner, the home network system enables automatic selection of a data transfer destination that is suitable to the situation.

If the user's family members are also in the house and located in different rooms from that of the user 6, a plurality of human sensors 3 sense humans. In this case, the device selecting unit 23 may select all video/audio devices associated with the human sensors 3, as destination devices. Alternatively, the device selecting unit 23 may select one of the video/audio devices based on a predetermined priority order.

The doorphone 1 may have a function of calling a particular person, and the human sensors 3 may have a function of sensing that particular person. In this case, a visitor can calla particular person when this person is in the house together with his or her family members, and only the video/audio device installed in the room where the particular person is present, can be selected as a destination device. The particular person can be called, for example, by providing a plurality of buttons 11 corresponding to family members, and the particular person can be identified, for example, by reading a noncontact IC tag each family member wears. The method of calling and identifying the particular person is not limited to this, and any method is applicable as long as it meets the purpose.

### (Second Embodiment)

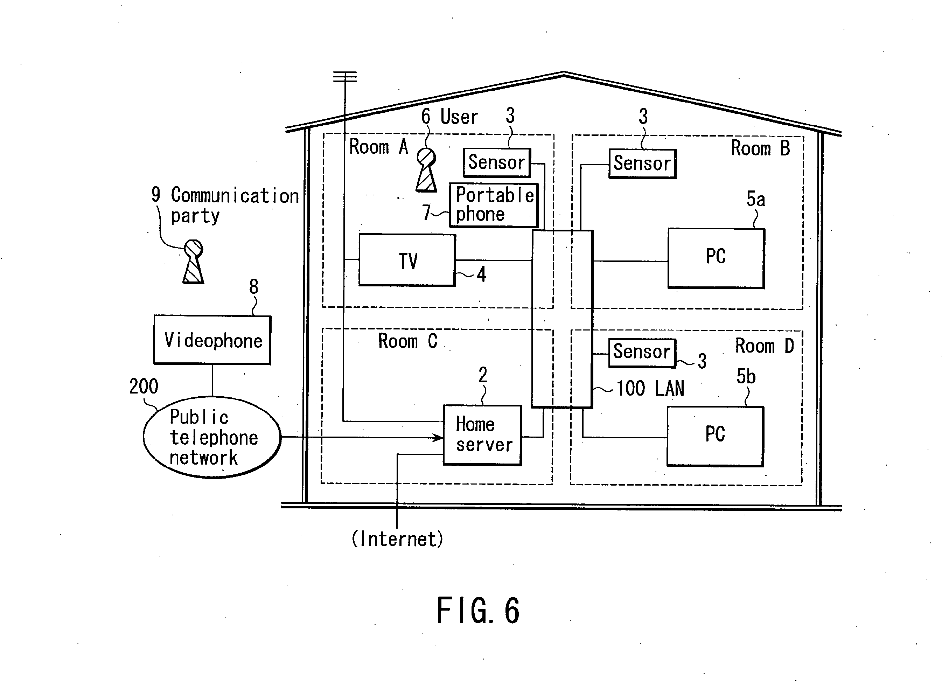

The second embodiment of the present invention will now be described. FIG. 6 illustrates a home network system according to the second embodiment of the present invention.

The home network system of the second embodiment differs from that of the first embodiment in that a home server 2 is connected not to a doorphone 1 but to a public telephone network 200. A user 6 carries a portable phone 7 that communicates with the home server 2 by wireless, and the home server 2 receives a call from a videophone 8 of the public telephone network 200. The home server 2 transfers image data on the image of the person who uses the videophone 8 (who will be hereinafter referred to simply as a communication party 9) to the video/audio device installed in the room where the user 6 is present. Likewise, the home server 2 transfers the voice data on the voice uttered by the communication party 9 to the portable phone 7. In addition, the home server 2 receives voice data on the voice (uttered by the user 6 and transmitted from the portable phone 7) and transmits this voice data to the videophone 8 over the public telephone network 200.

As can be seen from the above, the home network system enables the user 6 to communicate with the communication party 9 through the portable phone without reference to the room the user is in at the time, and the user 6 can watch the image of the party 9 displayed on the video/audio device of the room during communication. It is assumed here that the user 6 is in room A and is watching a TV program on the television receiver 4.

The portable phone 7 is an electronic device working on a wireless public telephone network, and is singly capable of communicating with another device through the wireless public telephone network. When used for communicating with the videophone 8 through the home server 2, the portable phone 7 serves as a communication terminal that performs the wireless communication based on the Bluetooth(R) standards with the home server 2.

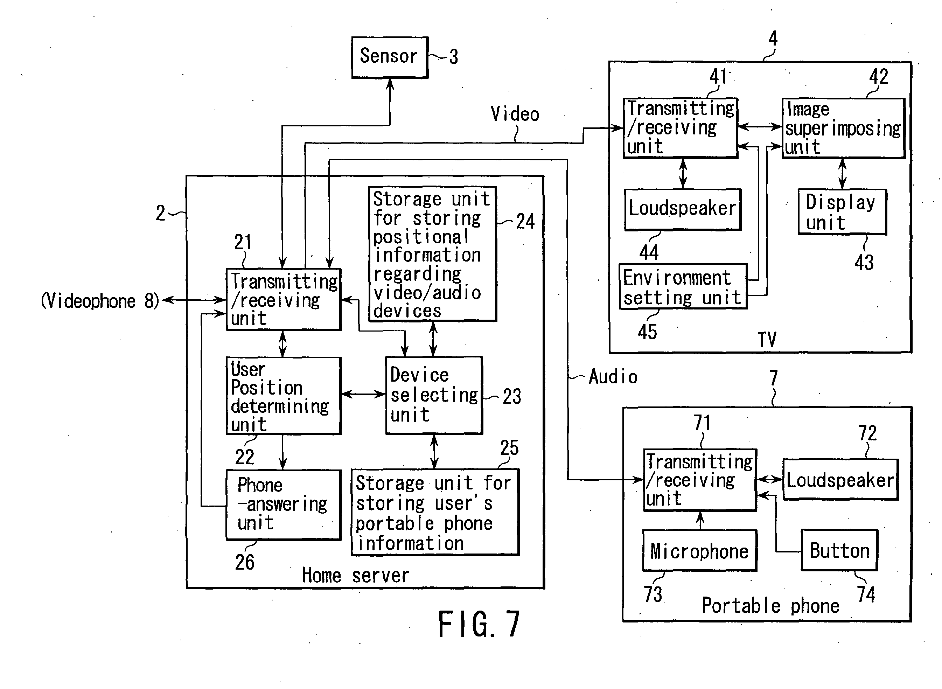

FIG. 7 is a function block of the home network system of the second embodiment.

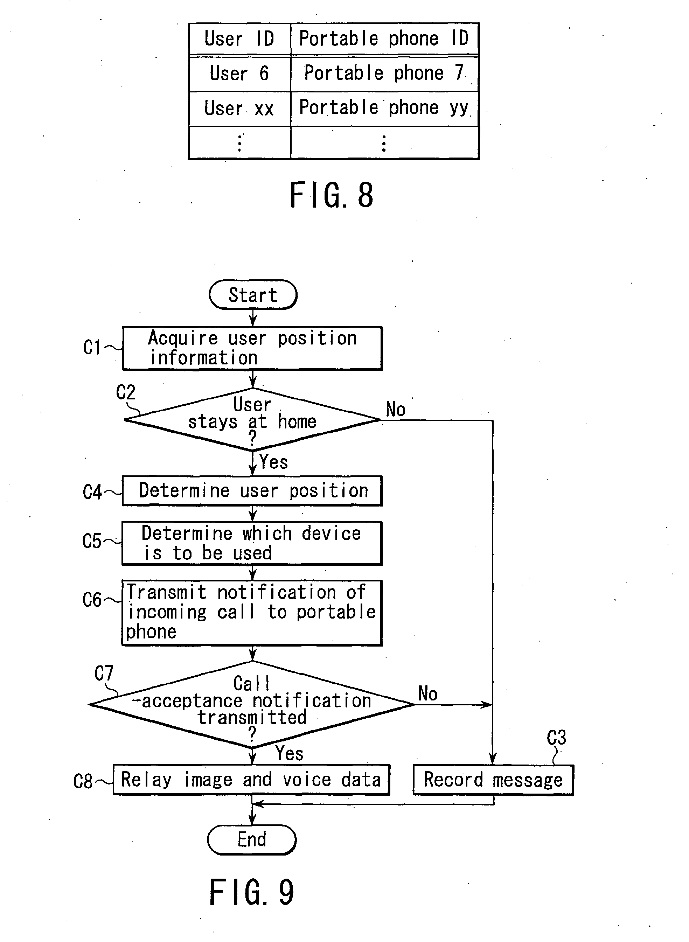

As FIG. 7 shows, the home server 2 of the network system comprises a storage unit 25 (which stores portable phone information) and a phone-answering unit 26, in addition to the structural elements described in connection with the first embodiment. FIG. 8 shows an example of telephone information which the storage unit 25 of the home network system of the second embodiment stores.

As FIG. 8 shows, the portable phone information the storage unit 25 stores is in the form of a table and includes fields corresponding to "user ID" and "portable phone ID".

The network system of the second embodiment comprises human sensors 3 that identify persons by reading noncontact IC tags. Therefore, a notification the device selecting unit 23 receives from a user position determining unit 22 includes information indicating that one of the human sensors 3 is sensing a specified user 6. Upon receipt of this notification, the device selecting unit 23 refers to the positional information a storage unit 24 stores to identify the positions of video/audio devices, and determines that a television receiver 4 is suitable for use as a destination device to which the image data from the videophone 8 should be sent. Simultaneous with this, the device selecting unit 23 refers to the portable phone information the storage unit 25 stores to identify the portable phones, and determines that the portable phone 7 is suitable for use as a destination device to which the voice data from the videophone 8 should be sent. Then, the device selecting unit 23 notifies the transmitting/receiving unit 21 that a call received through the public telephone network 200 should be transferred to the portable phone 7. Thereafter, the device selecting unit 23 notifies the transmitting/receiving unit 21 that it should transfer the image data from the videophone 8 to the television receiver 4, and that it should serve as a relay for relaying the voice data exchanged between the videophone 8 and the portable phone 7.

Where none of the human sensors 3 sense the user 6, the user position determining unit 22 notifies the phone-answering unit 26 of this state. In response, the phone-answering unit 26 sends an absence message to the videophone 8 by way of the transmitting/receiving unit 21. Then, the phone-answering unit 26 receives a message the videophone 8 sends through the transmitting/receiving unit 21, and records the received message.

The portable phone 7, which receives a call-notification message from the transmitting/receiving unit 21, comprises a transmitting/receiving unit 71, a loudspeaker 72, a microphone 73 and a button 74.

The transmitting/receiving unit 71 controls the communications the portable phone 7 and the home server 2 perform through the LAN 100. Upon receipt of a call notification, the transmitting/receiving unit 71 outputs a ringing sound-generating signal to the loudspeaker 72. Where the user 6 wishes to accept the call, the user 6 depresses the button 74 in response to the ringing signal, thereby sending a call-accepting notification to the home server 2.

Upon receipt of the call-accepting notification, the transmitting/receiving unit 21 of the home server 2 informs the public telephone network 200 of the user's acceptance of the call. Then, the transmitting/receiving unit 21 transfers the image data transmitted from the videophone 8 to the television receiver 4, and transfers the voice data transmitted from the videophone 8 to the portable phone 7. In the meantime, the voice data entered by use of the microphone 73 is transmitted from the portable phone 7 to the home server 2. Upon receipt of the voice data from the portable phone 7, the home server 2 transmits it to the videophone 8 over the public telephone network 200.

The television receiver 4, to which the image data is transferred, comprises a transmitting/receiving unit 41, an image superimposing unit 42, a display unit 43, a loudspeaker 44 and an environment setting unit 45. These units correspond to the transmitting/receiving unit 51, image superimposing unit 52, display unit 53, loudspeaker 54 and environment setting unit 55 of the personal computer 5a shown in FIG. 2.

FIG. 9 is a flowchart illustrating how the home server 2 operates in the home network system of the second embodiment.

Upon reception of the notification of an incoming call from the public phone network 200, the user position determining unit 22 acquires user position information through the transmitting/receiving unit 21 (Step C1) The user position information represents how the human sensors 3 of the rooms sense a user 6. If none of the human sensors 3 sense the user 6 (NO in Step C2), then the user position determining unit 21 transmits an absence message to the phone-answering unit 26. In response to this, the phone-answering unit 26 transmits the absence message to the videophone 8 by way of the transmitting/receiving unit 21, and receives and records a message transmitted from the videophone 8 by way of the transmitting/receiving unit 21 (Step C3).

If one of the human sensors 3 senses the user 6 (YES in Step C2), the user position determining unit 22 determines that the room where that human sensor 3 is installed indicates the position of the user 6. Then, the user position determining unit 22 notifies the device selecting unit 23 of the ID assigned to the human sensor 3 and the ID assigned to the user 6 (Step C4).

Upon receipt of this notification, the device selecting unit 23 refers to the positional information the storage unit 24 stores and recognizes which device (the television receiver 4, personal computer 5a, or personal computer 5b) is associated with the human sensor 3. Furthermore, the device selecting unit 23 refers to the phone information the storage unit 25 stores to identify the portable phone (Step C5).

Next, the device selecting unit 23 informs the transmitting/receiving unit 21 that a notification of an incoming call from the public telephone network 200 should be sent to the portable phone 7. Upon receipt of this notification, the transmitting/receiving unit 21 transmits the notification of the incoming call to the portable phone 7 (Step C6).

If a call-acceptance notification is transmitted from the portable phone 7 in response to the incoming call notification (YES in Step C7), the transmitting/receiving unit 21 starts two kinds of processing: one for transferring the image data, transmitted from the videophone 8, to the television receiver 4; and the other for relaying the voice data exchanged between the videophone 8 and the portable phone 7 (Step C8). If the call-acceptance notification is not transmitted even after a predetermined period of time (NO in Step C7), a notification indicating this state is sent to the phone-answering unit 26. Upon receipt of this notification, the phone-answering unit 26 transmits an absence message to the videophone 8 by way of the transmitting/receiving unit 21, and receives and records a message transmitted from the videophone 8 by way of the transmitting/receiving unit 21 (Step C3).

As described above, the home network system identifies the position of the user 6 by means of the human sensors 3, and selects video/audio device suited to the position of the user 6. In this manner, the home network system enables automatic selection of a data transfer destination that is suitable to the situation.

## Claims

1. A network system, having human sensors (3), which transfers data from a first device (1) to second devices (4, 5a, 5b) by way of a server device (2),
the server device **characterized by** comprising:
a positional information storage unit (24) which stores positional information representing correspondence between the human sensors and the second devices;
a transfer destination selecting unit (23) selecting one of the second devices as a destination device to which the data transmitted from the first device should be sent, based on sensing information from the human sensors and the positional information stored in the positional information storage unit; and
a data transfer unit (21) transferring data from the first device to the one of the second devices which is selected by the transfer designation selecting unit.

2. The network system according to claim 1, **characterized in that** the first device is a doorphone having a camera and a microphone, and data on an image photographed by the camera and data on voice entered from the microphone are transmitted to the server device.

3. The network system according to claim 1, **characterized in that** the human sensors are installed in different rooms respectively.

4. The network system according to claim 1, **characterized in that**, when a plurality of human sensors sense humans, the transfer destination selecting unit of the server device selects all of the second devices which the positional information associates with the plurality of human sensors as destination devices to which the data transmitted from the first device should be sent.

5. The network system according to claim 1, **characterized in that** the second devices comprising an environment setting unit (55) determining whether or not a power supply should be automatically turned on, when the data transmitted by the first device is received from the server device.

6. The network system according to claim 1, **characterized in that** the second devices comprising:
a display device (53); and
an image superimposing unit (52) superposing image data, which is transmitted by the first device and transferred by the server device, on image data shown on the display device.

7. The network system according to claim 6, **characterized in that** the second devices further comprising an environment setting unit (55) determining whether or not the image data transmitted by the first device should be superposed on the image data shown on the display device when the image data transmitted by the first device is transferred by the server device.

8. The network system according to claim 1, **characterized in that**:
the first device comprising a designating unit designating a data recipient;
the human sensors comprising a identifying unit identifying a person; and
the transfer destination selecting unit of the server device selects one of the second devices which the positional information associates with a human sensor that senses a data recipient designated by the designating unit of the first device, as a destination device to which the data transmitted from the first device should be sent.

9. The network system according to claim 1, **characterized in that**:
the first device is a videophone that performs communications through the network by use of images;
the human sensors comprising a identifying unit identifying a sensed person;
the server device comprising a user information storage unit (25) which stores user information indicating a communication device used by the person identifiable by the human sensors; and
the data transfer unit of the server device transfers image data transmitted from the first device to the second device selected by the transfer destination selecting unit of the server device, transfers voice data transmitted from the first device to a communication device indicated by the user information storage unit as a device using the person identified by the human sensor, and transfers the voice data transmitted from the communication device to the first device.

10. A communication method for transferring data from a first device to second devices, **characterized by** comprising the steps of:
acquiring (A1) sensing information on human sensors;
selecting (A2) one of the second devices as a destination device to which the data transmitted from the first device should be sent, based on the sensing information and positional information representing correspondence between the human sensors and the second devices; and
transferring (A6) data from the first device to the one of the selected second devices.

11. The communication method according to claim 10, **characterized in that**, when a plurality of human sensors sense humans, the selecting one of the second devices selects all of the second devices which the positional information associates with the plurality of human sensors, as destination devices to which the data transmitted from the first device should be sent.

12. The communication method according to claim 10, **characterized in that** the selecting one of the second devices selects one of the second devices which the positional information associates with a human sensor that senses a data recipient designated by the first device, as a destination device to which the data transmitted from the first device should be sent.

13. The communication method according to claim 10, **characterized in that** the transferring data transfers image data transmitted from the first device to the selected second device, transfers voice data transmitted from the first device to a communication device using a person identified by the human sensor based on user information indicating a communication device used by a person identifiable by the sensor, and transfers the voice data transmitted from the communication device to the first device.
